# EUROPEAN PATENT SPECIFICATION

(11) **EP 1 399 917 B1**
(45) Date of publication and mention of the grant of the patent: **21.09.2005**
(21) Application number: 02726396.1
(22) Date of filing: 05.06.2002
(51) Int. Cl.: G10L 19/02, H04B 1/66

(54) **EDITING OF AUDIO SIGNALS**
EDITIEREN VON AUDIOSIGNALEN
EDITION DE SIGNAUX AUDIO

(30) Priority: 08.06.2001 EP 01202195
(43) Date of publication of application: 24.03.2004
(73) Proprietor: Koninklijke Philips Electronics N.V., 5621 BA Eindhoven (NL)
(72) Inventor: OOMEN, Arnoldus W.J., Internat. Octrooibureau BV, 5656 AA Eindhoven (NL); VAN DE KERKHOF, Leon M., Internat.Octrooibureau BV, 5656 AA Eindhoven (NL)
(74) Representative: Groenendaal, Antonius W. M.
(86) International application number: PCT/IB2002/002148
(87) International publication number: WO 2002/101725

(56) References cited:
- US-A- 5 886 276
- PAINTER T ET AL: "Perceptual coding of digital audio" PROCEEDINGS OF THE IEEE, IEEE. NEW YORK, US, vol. 88, no. 4, April 2000 (2000-04), pages 451-515, XP002197929 ISSN: 0018-9219
- PURNHAGEN H: "Advances in parametric audio coding" APPLICATIONS OF SIGNAL PROCESSING TO AUDIO AND ACOUSTICS, 1999 IEEE WORKSHOP ON NEW PALTZ, NY, USA 17-20 OCT. 1999, PISCATAWAY, NJ, USA,IEEE, US, 17 October 1999 (1999-10-17), pages 31-34, XP010365061 ISBN: 0-7803-5612-8
- VAFIN R ET AL: "Modifying transients for efficient coding of audio" 2001 IEEE INTERNATIONAL CONFERENCE ON ACOUSTICS, SPEECH, AND SIGNAL PROCESSING. PROCEEDINGS (CAT. NO.01CH37221), 2001 IEEE INTERNATIONAL CONFERENCE ON ACOUSTICS, SPEECH, AND SIGNAL PROCESSING. PROCEEDINGS, SALT LAKE CITY, UT, USA, 7-11 MAY 2001, pages 3285-3288 vol.5, XP002212447 2001, Piscataway, NJ, USA, IEEE, USA ISBN: 0-7803-7041-4
- NIEUWENHUIJSE J ET AL: "Robust exponential modeling of audio signals" ACOUSTICS, SPEECH AND SIGNAL PROCESSING, 1998. PROCEEDINGS OF THE 1998 IEEE INTERNATIONAL CONFERENCE ON SEATTLE, WA, USA 12-15 MAY 1998, NEW YORK, NY, USA,IEEE, US, 12 May 1998 (1998-05-12), pages 3581-3584, XP010279632 ISBN: 0-7803-4428-6

## Description

The present invention relates to editing audio signals.

In transform coders, in general, an incoming audio signal is encoded into a bitstream comprising one or more frames, each including a header and one or more segments. The encoder divides the signal into blocks of samples acquired at a given sampling frequency and these are transformed into the frequency domain to identify spectral characteristics of the signal for a given segment. The resulting coefficients are not transmitted to full accuracy, but instead are quantized so that in return for less accuracy, a saving in word length and so compression is achieved. A decoder performs an inverse transform to produce a version of the original having a higher, shaped, noise floor.

It is often desirable to edit audio signals, for example, by splicing an original signal to include another signal or simply to remove portions of the original signal. In the case the audio signal is represented in a compressed format, it is not desirable to first decompress the original audio signal into the time domain so that it may be spliced with another time domain signal before lossy re-compression is performed on the edited signal. This generally will result in lower quality of the original portions of the audio signal. Thus, editing of the bitstream compressed data is normally done on a frame basis, associated with the compressed format, with edit points being made at frame boundaries. This leaves the original signal quality unaffected by the insertion of the new signal.

The accuracy of editing is therefore related to the frame size - which typically has a resolution of approximately 100ms. Even if single segment frames having a higher bit-rate requirement (because of frame header overhead) are used, accuracy can be at best segment size - a resolution of approximately 10ms. This is dealt with in Painter et.al., "Perceptual Coding of Digital Audio", Proceedings of the IEEE, Vol. 88, No.4, April 2000.

So, in order to allow fine grid editing, the frames need to be suitably short. The disadvantage of short frames is excessive frame overhead, involved in for example the frame header, and the fact that redundancies between successive frames cannot be exploited to the fullest extent, giving rise to a higher bit-rate.

So, for efficient coding, large frames are desired whereas in terms of editability, short frames are desired. Unfortunately, these aspects are conflicting.

In a sinusoidal coder of the type described in published PCT application WO-A-01/69593 it is possible to define so-called transient positions, which are positions of sudden changes in dynamic range. Typically, at a transient position, a sudden change in dynamic range is observed and is synthesised as a transient waveform.

If adaptive framing is used, then from the positions of transient waveforms, segmentation for the synthesis of the remaining sinusoidal and noise components of the signal is calculated.

According to the present invention there is provided a method of editing an original audio signal represented by an encoded audio stream, said encoded audio stream comprising a plurality of frames, each of said frames including a header and one or more segments, each segment including parameters representative of said original audio signal, the method comprising the steps of: determining an edit point corresponding to an instant in time in said original audio signal; inserting in a target frame representing said original audio signal for a time period incorporating said instant in time, a parameter corresponding to a transient at said instant in time and an indicator that said parameter represents an edit point; and generating an encoded audio stream representative of an edited audio signal and including said target frame.

In a preferred embodiment, there is provided a method of editing relatively long frames with high sub-frame accuracy for editing in the context of sinusoidal coding. In order to provide such a method for high accuracy editing, so called transient positions can be applied where an edit point is desired in a previously encoded signal. The adding is done as some kind of post-processing, by for example an audio editing application. The advantage of using a transient position as an edit point, is that the signal can then abruptly end or start at the transient position, in principle with sample resolution accuracy, whereas in prior art systems, one is limited to frame boundaries, which occur, for example, once per 100 ms.

Further, according to the present invention, there are provided an audio decoding method as set out in claim 14, an audio editor as set out in claim 22, an audio player as set out in claim 23 and an audio stream as set out in claim 25.

The invention, in fact, 'abuses' the transient positions to define edit points. These edit-transient positions are in fact a kind of pseudo-transient, because at these positions no transient waveform is generated.

The invention differs from prior art adaptive framing in that in adaptive framing, the framing is determined depending on the transient positions (so the subdivision of the frames is done between two subsequent transient positions). The invention is different in that a given framing is desired (on an edit position) and a transient position is defined given said desired framing. In fact, the invention can operate in conjunction with or without adaptive framing.

An embodiment of the invention will now be described with reference to the accompanying drawings:
Figure 1 shows an embodiment of an audio coder of the type described in WO-A-01/69593;
Figure 2 shows an embodiment of an audio player arranged to play an audio signal generated according to the invention;
Figure 3 shows a system comprising an audio coder, an audio player of Figure 2 and an editor according to the invention; and
Figure 4 shows a portion of a bitstream processed according to the invention.

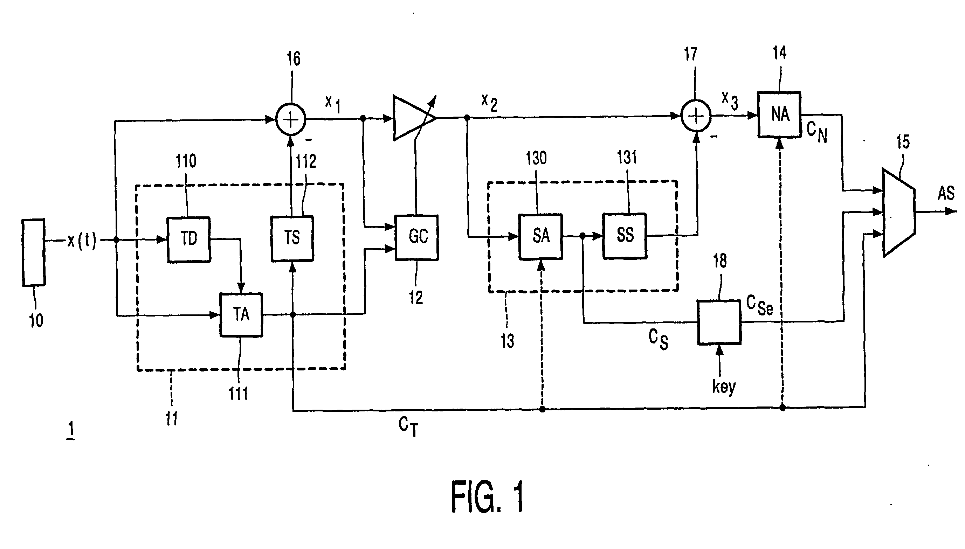

In a preferred embodiment of the present invention, Figure 1, the audio signal to be edited is initially generated by a sinusoidal coder of the type described in WO-A-01/69593. In the earlier case, the audio coder 1 samples an input audio signal at a certain sampling frequency resulting in a digital representation x(t) of the audio signal. This renders the time-scale t dependent on the sampling rate. The coder 1 then separates the sampled input signal into three components: transient signal components, sustained deterministic components, and sustained stochastic components. The audio coder 1 comprises a transient coder 11, a sinusoidal coder 13 and a noise coder 14. The audio coder optionally comprises a gain compression mechanism (GC) 12.

In this case, transient coding is performed before sustained coding. This is advantageous because in this embodiment experiments have shown that transient signal components are less efficiently coded in sustained coders. If sustained coders are used to code transient signal components, a lot of coding effort is necessary; for example, one can imagine that it is difficult to code a transient signal component with only sustained sinusoids. Therefore, the removal of transient signal components from the audio signal to be coded before sustained coding is advantageous. It will also be seen that a transient start position derived in the transient coder may be used in the sustained coders for adaptive segmentation (adaptive framing).

Nonetheless, the invention is not limited to the particular use of transient coding disclosed in WO-A-01/69593 and this is provided for exemplary purposes only.

The transient coder 11 comprises a transient detector (TD) 110, a transient analyzer (TA) 111 and a transient synthesizer (TS) 112. First, the signal x(t) enters the transient detector 110. This detector 110 estimates if there is a transient signal component and its position. This information is fed to the transient analyzer 111 and may also be used in the sinusoidal coder 13 and the noise coder 14 to obtain signal-induced adaptive segmentation. If the position of a transient signal component is determined, the transient analyzer 111 tries to extract (the main part of) the transient signal component. It matches a shape function to a signal segment preferably starting at an estimated start position, and determines content underneath the shape function, by employing for example a (small) number of sinusoidal components. This information is contained in the transient code CT and more detailed information on generating the transient code CT is provided in WO-A-01/69593 . In any case, it will be seen that where, for example, the transient analyser employs a Meixner like shape function, then the transient code CT will comprise the start position at which the transient begins; a parameter that is substantially indicative of the initial attack rate; and a parameter that is substantially indicative of the decay rate; as well as frequency, amplitude and phase data for the sinusoidal components of the transient.

If the bitstream produced by the coder 1 is to be synthesized by a decoder independently of the sampling frequency used to generate the bitstream, the start position should be transmitted as a time value rather than, for example, a sample number within a frame; and the sinusoid frequencies should be transmitted as absolute values or using identifiers indicative of absolute values rather than values only derivable from or proportional to the transformation sampling frequency. In other prior art systems, the latter options are normally chosen as, being discrete values, they are intuitively easier to encode and compress. However, this requires a decoder to be able to regenerate the sampling frequency in order to regenerate the audio signal.

It is been disclosed in WO-A-01/69593 that the transient shape function may also include a step indication in case the transient signal component is a step-like change in amplitude envelope. Again, although the invention is not limited to either implementation, the location of the step-like change may be encoded as a time value rather than a sample number, which would be related to the sampling frequency.

The transient code CT is furnished to the transient synthesizer 112. The synthesized transient signal component is subtracted from the input signal x(t) in subtractor 16, resulting in a signal x1. In case, the GC 12 is omitted, x1 = x2. The signal x2 is furnished to the sinusoidal coder 13 where it is analyzed in a sinusoidal analyzer (SA) 130, which determines the (deterministic) sinusoidal components. The resulting information is contained in the sinusoidal code CS. A more detailed example illustrating the generation of an exemplary sinusoidal code CS is provided in PCT patent application No. WO00/79579-A1 (Attorney Ref: PHN 017502). Alternatively, a basic implementation is disclosed in "Speech analysis/synthesis based on sinusoidal representation", R McAulay and T. Quartieri, IEEE Trans. Acoust., Speech, Signal Process., 43:744-754, 1986 or "Technical description of the MPEG-4 audio-coding proposal from the University of Hannover and Deutsche Bundespost Telekom AG (revised)", B. Edler, H. Pumhagen and C. Ferekidis, Technical note MPEG95/0414r, Int. Organisation for Standardisation ISO/IEC JTC1/SC29/WG11, 1996.

In brief, however, the sinusoidal coder of the preferred embodiment encodes the input signal x2 as tracks of sinusoidal components linked from one frame segment to the next. The tracks are initially represented by a start frequency, a start amplitude and a start phase for a sinusoid beginning in a given segment (birth). Thereafter, the track is represented in subsequent segments by frequency differences, amplitude differences and, possibly, phase differences (continuations) until the segment in which the track ends (death). In practice, it may be determined that there is little gain in coding phase differences. Thus, phase information can be coded as absolute values. Alternatively, phase information need not be encoded for continuations at all and phase information may be regenerated using continuous phase reconstruction.

Again, if the bitstream is to be made sampling frequency independent, the start frequencies are encoded within the sinusoidal code CS as absolute values or identifiers indicative of absolute frequencies to ensure the encoded signal is independent of the sampling frequency.

From the sinusoidal code CS, the sinusoidal signal component is reconstructed by a sinusoidal synthesizer (SS) 131. This signal is subtracted in subtractor 17 from the input x2 to the sinusoidal coder 13, resulting in a remaining signal x3 devoid of (large) transient signal components and (main) deterministic sinusoidal components.

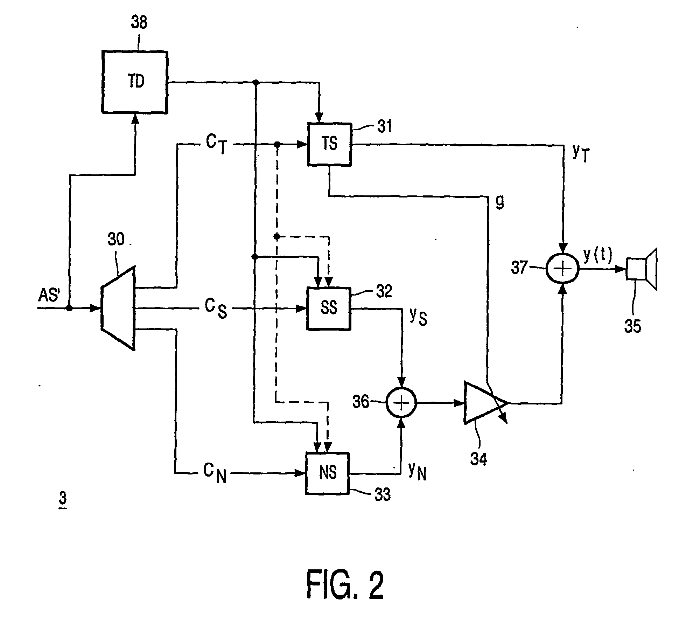

The remaining signal x3 is assumed to mainly comprise noise and the noise analyzer 14 of the preferred embodiment produces a noise code CN representative of this noise. Conventionally, as in, for example, PCT patent application No. WO-A-01/89086 a spectrum of the noise is modelled by the noise coder with combined AR (auto-regressive) MA (moving average) filter parameters (pi,qi) according to an Equivalent Rectangular Bandwidth (ERB) scale. Within the decoder, Figure 2, the filter parameters are fed to a noise synthesizer NS 33, which is mainly a filter, having a frequency response approximating the spectrum of the noise. The NS 33 generates reconstructed (synthetic) noise yN by filtering a white noise signal with the ARMA filtering parameters (pi,qi) and subsequently adds this to the synthesized transient yT and sinusoid yS signals.

However, the ARMA filtering parameters (pi,qi) are again dependent on the sampling frequency of the noise analyser and, if the coded bitstream is to be independent of the sampling frequency, these parameters are transformed into line spectral frequencies (LSF) also known as Line Spectral Pairs (LSP) before being encoded. These LSF parameters can be represented on an absolute frequency grid or a grid related to the ERB scale or Bark scale. More information on LSP can be found at "Line Spectrum Pair (LSP) and speech data compression", F. K. Soong and B. H. Juang, ICASSP, pp. 1.10.1, 1984. In any case, such transformation from one type of linear predictive filter type coefficients in this case (pi,qi) dependent on the encoder sampling frequency into LSFs which are sampling frequency independent and vice versa as is required in the decoder is well known and is not discussed further here. However, it will be seen that converting LSFs into filter coefficients (p'i,q'i) within the decoder can be done with reference to the frequency with which the noise synthesizer 33 generates white noise samples, so enabling the decoder to generate the noise signal yN independently of the manner in which it was originally sampled.

It will be seen that, similar to the situation in the sinusoidal coder 13, the noise analyzer 14 may also use the start position of the transient signal component as a position for starting a new analysis block. However, the segment sizes of the sinusoidal analyzer 130 and the noise analyzer 14 are not necessarily equal.

Finally, in a multiplexer 15, an audio stream AS is constituted which includes the codes CT, CS and CN. The audio stream AS is furnished to e.g. a data bus, an antenna system, a storage medium etc.

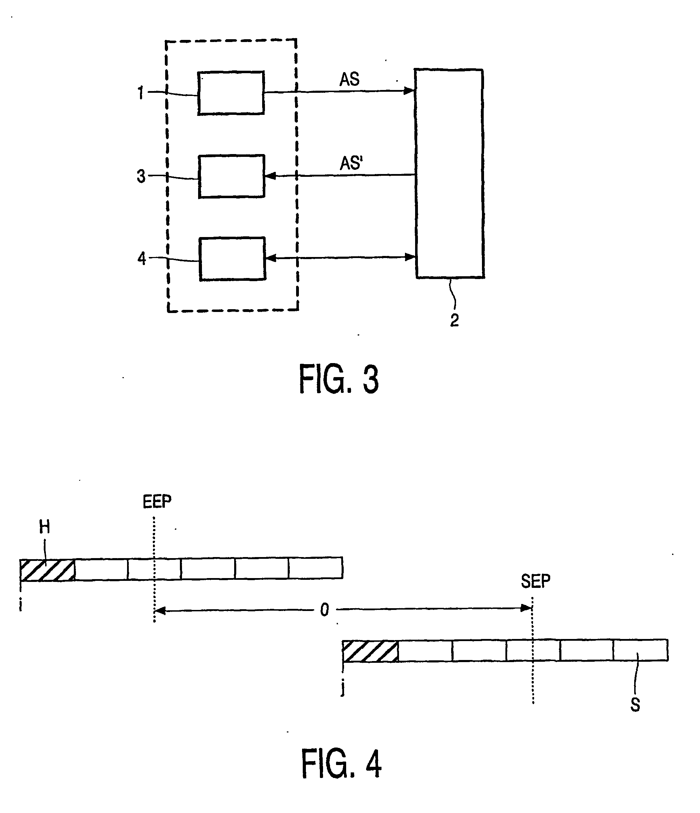

Referring to Figure 3, an editor 4 of the present invention is adapted to process one or more audio streams generated by, for example, the coder 1 of the preferred embodiment. In one embodiment of the invention, the editor 4 comprises authoring type application software that enables a user to select respective points or instants in time in one or more stored original audio signals at which respective edit point(s) are to be inserted to generate an edited signal. As such the editor 4 may in turn include a decoder 2, of the type described in WO-A-01/69593 so allowing the user to listen to the original audio signal(s), as well as perhaps even including a graphics component, so allowing the graphical decoded signal(s) to be viewed, before the user picks the edit point(s). Nonetheless, while the preferred embodiment of the invention is described in terms of an interactive editor, the invention is not limited to user interaction driven editing of stored audio signals. Thus, for example, the editor may be a piece of daemon software running on a network device through which audio signals are streamed. Such an editor may be adapted to automatically cut or splice one or more original audio signals at pre-determined points before relaying the edited signals further.

In any case, knowing the point in time of the edit point, the editor determines a target frame in the original signal representing a time period beginning before and ending after the edit point.

For each edit point determined in the one or more original bitstreams, the editor is arranged to insert a step transient code with a location indicating a point in time corresponding to the edit point into a respective target frame of the edited signal bitstream.

Referring to Figure 4, which illustrates an end-edit point (EEP) made in frame i and a start-edit point (SEP) made in frame j of an edited bitstream. Thus, for example, the signal encoded in frame j et seq. is being inserted in an original signal, which has been spliced at a time occurring in a segment within frame i. It is therefore desired that, as a result, only the content prior to the transient position in frame i and after the transient position in frame j is synthesised. No output should result from the intermediate samples in the frames, and so in a first embodiment, if frame i and frame j are concatenated, the resulting signal includes a short mute.

The editor places an indicator in the header (H) for each frame (shown hashed) to label the tracks at the transient positions such that, when decoded as explained below, they will fade-out around the transient position for an end-edit point or will fade-in around this transient position for a start-edit point. The transient parameter itself or an additional parameter associated with the step-transient may optionally be used to describe a preferred fade-in fade-out type, i.e. whether it is a mute, a cos-function or something else. It is up to the decoder to determine how to deal with such a parameter, i.e. whether this should be a fade, how to apply any given type of fade-in/out, and how this fading should occur. The decoder can further support different options for this feature. Thus, because a transient position can be defined with sample accuracy resolution, so editing of the audio signal(s) can be done with sample accuracy. It will therefore be seen that the transients representing the start and end edit points define a frame boundary within their respective frames with the tracks representing the audio signal prior to the end-edit point being independent of the tracks representing the audio signal after the start-edit point.

Fig. 2 shows an audio player 3 for decoding a signal according to the invention. An audio stream AS', for example, generated by an encoder according to Fig. 1 and possibly post processed by the editor 4, is obtained from the data bus, antenna system, storage medium etc. As disclosed in WO-A-01/69593, the audio stream AS is de-multiplexed in a de-multiplexer 30 to obtain the codes CT, CS and CN. These codes are furnished to a transient synthesizer 31, a sinusoidal synthesizer 32 and a noise synthesizer 33 respectively. From the transient code CT, the transient signal components are calculated in the transient synthesizer 31. In case the transient code indicates a shape function, the shape is calculated based on the received parameters. Further, the shape content is calculated based on the frequencies and amplitudes of the sinusoidal components. The total transient signal yT is a sum of all transients.

If adaptive framing is used, then from the transient positions, segmentation for the sinusoidal synthesis SS 32 and the noise synthesis NS 33 is calculated. The sinusoidal code CS is used to generate signal yS, described as a sum of sinusoids on a given segment. The noise code CN is used to generate a noise signal yN. To do this, the line spectral frequencies for the frame segment are first transformed into ARMA filtering parameters (p'i,q'i) dedicated for the sampling frequency at which the white noise is generated by the noise synthesizer and these are combined with the white noise values to generate the noise component of the audio signal. In any case, subsequent frame segments are added by, e.g. an overlap-add method.

The total signal y(t) comprises the sum of the transient signal yT and the product of any amplitude decompression (g) and the sum of the sinusoidal signal yS and the noise signal yN. The audio player comprises two adders 36 and 37 to sum respective signals. The total signal is furnished to an output unit 35, which is e.g. a speaker.

As disclosed in the related application, if the transient code CT indicates a step, then no transient is calculated. However, the audio player of the preferred embodiment further includes a frame header decoder 38. The decoder 38 is arranged to detect in the frame header if one of the segments of the frame includes one of a start-edit point or an end-edit point. If the header indicates an end-edit point (EEP) as in frame i of Figure 4, then the decoder signals to each of the transient, sinusoidal and noise synthesizers 31, 32, 33 that their output after either the sample number or time corresponding to the location of the step transient should be set to zero, optionally employing a fade-out interval.

If the header (H) indicates a start-edit point (SEP) as in frame j of Figure 4, then the decoder signals to each of the transient, sinusoidal and noise synthesizers 31, 32, 33 that their output before either the sample number or time corresponding to the location of the step transient should be set to zero, optionally employing a fade-in interval. This is particularly advantageous in the case of the sinusoidal synthesizer because, it can continue to synthesize tracks from the start of the frame as normal, working out frequency, amplitude and phase information from the birth of a track through its continuations, but simply setting its output to zero until the location of the step transient. At this time it then begins outputting its calculated values, some of which may be continuations of the original signal beginning before the step transient. Thus, when an audio signal containing frames such as shown in Figure 4 is decoded, it results in a short-mute running from the time of the end-edit point to the start-edit point.

If this is perceived as a problem, then the player 3 can be adapted to cache the incoming audio stream for a maximum of the total likely mute length in any audio signal. This would allow the player, if required, to read ahead when decoding the audio stream, so that if an end-edit point were detected, it could skip until the end of the frame, calculate the tracks values through the next frame until the start-edit point and begin outputting a concatenated synthesized signal immediately after the signal at the start-edit point, optionally applying an appropriate cross-over fade.

In another alternative solution, it may not be seen as desirable to need to calculate sinusoidal track values until the segment including the start-edit point of a frame such as frame j. In this case, for continuation tracks in the same segment as the start-edit point, the editor can be arranged to calculate absolute frequencies, amplitude and phase for such tracks, thus replacing continuation track codes in the bitstream with birth track codes. Then, any continuation or birth codes for the track in previous segments of the frame can be removed or zeroed, so saving slightly on bit-rate requirements and audio player processing.

In any case, it will be seen that in principle, the syntax of any coding scheme could be extended to provide the flexibility of sample accuracy editing described above.

Furthermore, many variations of the preferred embodiments described above are possible, according to the circumstances in implementing the invention. So, for example, if signals are to be edited extensively, it will be seen that repeated updating of the stored signal(s) to include the edit point transient information may require significant resources in handling the large amount of data involved in a bitstream. In a preferred editor, the bitstream is not modified each time an edit-point is determined, rather a list of edit-points is maintained by the editor in association with the bit-stream(s) being edited. Once the user has completed the editing of the signal, transients are inserted in accordance with the list of edit-points and the edited bitstream is written once to storage.

In another variation, the use of a separate parameter defining the transient and indicator indicating that the transient is an edit-point can be avoided by defining a single or pair of edit-point transient(s) which integrally both comprise a parameter defining a transient at an instant in time and indicate that the parameter is an edit point or specifically a start or an end edit point. Where a single type of such edit-point transient is used, these transients can be paired so that when a decoder detects a first such transient, it produces a null signal after this point and only begins outputting signal once a second such transient of the pair is detected.

In both this case and in the preferred embodiment, it will be appreciated that the decoder can be programmed to assume that the frame following an end-edit point or first edit-point should include a start-edit point. Thus, if a signal is corrupted and the decoder does not detect a start-edit point in the frame following an end-edit point, it can begin outputting signal from the start of the next frame, so minimizing the damage caused by the corruption.

Fig. 3 shows an audio system according to the invention comprising an audio coder 1 as shown in Fig. 1, an audio player 3 as shown in Fig. 2 and an editor as described above. Such a system offers editing, playing and recording features. The audio stream AS is furnished from the audio coder to the audio player or editor over a communication channel 2, which may be a wireless connection, a data bus or a storage medium. In case the communication channel 2 is a storage medium, the storage medium may be fixed in the system or may also be a removable disc, solid state storage device such as a Memory Stick™ from Sony Corporation etc. The communication channel 2 may be part of the audio system, but will however often be outside the audio system.

It is observed that the present invention can be implemented in dedicated hardware, in software running on a DSP (Digital Signal Processor) or on a general-purpose computer. The present invention can be embodied in a tangible medium such as a CD-ROM or a DVD-ROM carrying a computer program for executing an encoding method according to the invention. The invention can also be embodied as a signal transmitted over a data network such as the Internet, or a signal transmitted by a broadcast service.

The invention finds application in fields such as Solid State Audio, Internet audio distribution or any compressed music distribution. It will also be seen that the operation of the invention is also compatible with the compatible scrambling scheme described in WO-A-02/087241.

It should be noted that the above-mentioned embodiments illustrate rather than limit the invention, and that those skilled in the art will be able to design many alternative embodiments without departing from the scope of the appended claims. In the claims, any reference signs placed between parentheses shall not be construed as limiting the claim. The word 'comprising' does not exclude the presence of other elements or steps than those listed in a claim. The invention can be implemented by means of hardware comprising several distinct elements, and by means of a suitably programmed computer. In a device claim enumerating several means, several of these means can be embodied by one and the same item of hardware. The mere fact that certain measures are recited in mutually different dependent claims does not indicate that a combination of these measures cannot be used to advantage.

In summary, a preferred embodiment of the invention provides a method of editing relatively long frames with high sub-frame accuracy for editing in the context of sinusoidal coding is disclosed. In order to provide such a method for high accuracy editing, so called transient positions can be applied where an edit point (EEP, SEP) is desired in a previously encoded signal (AS). The adding is done as some kind of post-processing, by for example an audio editing application. The advantage of using a transient position as an edit point, is that the signal can then abruptly end or start at the transient position, in principle with sample resolution accuracy, whereas in prior art systems, one is limited to frame boundaries, which occur, for example, once per 100 ms.

## Claims

1. A method of editing (4) an original audio signal (x) represented by an encoded audio stream (AS), said encoded audio stream comprising a plurality of frames, each of said frames including a header (H) and one or more segments (S), each segment including parameters (CT, CS, CN) representative of said original audio signal (x), the method comprising the steps of:
determining an edit point corresponding to an instant in time in said original audio signal (x); inserting in a target frame (i,j) representing said original audio signal (x) for a time period incorporating said instant in time, a parameter corresponding to a transient (EEP, SEP) at said instant in time and an indicator that said parameter represents an edit point; and
generating an encoded audio stream (AS) representative of an edited audio signal and including said target frame.

2. A method as claimed in claim 1 wherein said indicator comprises one of a start-edit point or an end-edit point.

3. A method as claimed in claim 1 wherein said inserting step comprises inserting said parameter in a segment of said target frame and inserting said indicator in a header of said target frame.

4. A method as claimed in claim 1, wherein said parameter representing said transient indicates a step-like change in amplitude in said edited audio signal.

5. A method as claimed in claim 1 wherein said parameters representative of said original audio signal (x) comprise filter parameters (CN) for a filter which has a frequency response approximating a target spectrum of the noise component representative of a noise component of the audio signal.

6. A method as claimed in claim 1 wherein said parameters representative of said original audio signal (x) comprise parameters (CN) independent of a first sampling frequency employed to generate said encoded audio stream, said parameters being derived from filter parameters (pi, qi) for a filter which has a frequency response approximating a target spectrum of the noise component representative of a noise component of the audio signal.

7. A method as claimed in claim 6 wherein said filter parameters are auto-regressive (pi) and moving average (qi) parameters and said independent parameters are indicative of Line Spectral Frequencies.

8. A method as claimed in claim 7 wherein said independent parameters are represented in one of absolute frequencies or a Bark scale or an ERB scale.

9. A method as claimed in claim 1 wherein said parameters representative of said original audio signal (x) comprise parameters (CT) representing respective positions of transient signal components in the audio signal; said parameters defining a shape function having shape parameters and a position parameter.

10. A method as claimed in claim 9 wherein said position parameter is representative of an absolute time location of said transient signal component in said original audio signal (x).

11. A method as claimed in claim 1 wherein said parameters representative of said original audio signal (x) comprise parameters (CS) representing sustained signal components of the audio signal, said parameters comprising tracks representative of linked signal components present in subsequent signal segments and extending tracks on the basis of parameters of previous linked signal components.

12. A method as claimed in claim 11 wherein the parameters for a first signal component in a track include a parameter representative of an absolute frequency of said signal component.

13. A method as claimed in claim 1, wherein said edited bitstream comprises a recommended minimum bandwidth to be used by a decoder.

14. Method of decoding (3) an audio stream, the method comprising the steps of:
reading an encoded audio stream (AS') representative of an edited audio signal (x), said stream comprising a plurality of frames, each of said frames including a header (H) and one or more segments (S), each segment including parameters (CT, CS, CN) representative of said edited audio signal (x); and
responsive to a frame representing said edited audio signal (x) for a given time period including a parameter corresponding to a transient at an instant in time within said time period and an indicator that said parameter represents an edit point, producing a null output for one portion of the time period and employing (31,32,33) said parametric representation to synthesize said audio signal for the remaining portion of the time period, said portions being divided at said instant in time.

15. A method as claimed in claim 14 wherein said producing step is responsive to said indicator indicating that said edit point is a end-edit point to produce a null output for the portion of the time period following said instant in time and to employ (31,32,33) said parametric representation to synthesize said audio signal for the portion of the time period before said instant in time.

16. A method as claimed in claim 15 wherein said producing step is responsive to said end-edit point to fade-out said signal around said instant in time.

17. A method as claimed in claim 14 wherein said producing step is responsive to said indicator indicating that said edit point is a start-edit point to produce a null output for the portion of the time period before said instant in time and to employ (31,32,33) said parametric representation to synthesize said audio signal for the portion of the time period after said instant in time.

18. A method as claimed in claim 17 wherein said producing step is responsive to said start-edit point to fade-in said signal around said instant in time.

19. A method as claimed in claim 14 wherein said producing step comprises producing said null output as a mute signal.

20. A method as claimed in claim 14 wherein said producing step comprises concatenating the audio signal ending at a first edit point of a pair of edit points with the audio signal beginning at a second edit point of said pair of edit points.

21. A method as claimed in claim 20 wherein said concatenating step comprises producing a cross-over fade of the audio signal ending at said first edit point with the audio signal beginning at the second edit point.

22. Audio editor (4) for editing (4) an original audio signal (x) represented by an encoded audio stream (AS), said encoded audio stream comprising a plurality of frames, each of said frames including a header (H) and one or more segments (S), each segment including parameters (CT, CS, CN) representative of said original audio signal (x), said editor comprising:
means for determining an edit point corresponding to an instant in time in said original audio signal (x);
means for inserting in a target frame representing said original audio signal (x) for a time period incorporating said instant in time, a parameter corresponding to a transient at said instant in time and an indicator that said parameter represents an edit point; and
means for generating an encoded audio stream (AS) representative of an edited audio signal and including said target frame.

23. Audio player (3), comprising:
means for reading an encoded audio stream (AS') representative of an edited audio signal (x), said stream comprising a plurality of frames, each of said frames including a header (H) and one or more segments (S), each segment including parameters (CT, CS, CN) representative of said edited audio signal (x); and
means, responsive to a frame representing said edited audio signal (x) for a given time period including a parameter corresponding to a transient at an instant in time within said time period and an indicator that said parameter represents an edit point, for producing a null output for one portion of the time period and employing (31,32,33) said parametric representation to synthesize said audio signal for the remaining portion of the time period, said portions being divided at said instant in time.

24. Audio system comprising an audio editor (4) as claimed in claim 22 and an audio player (3) as claimed in claim 23.

25. Audio stream (AS) representative of an edited audio signal (x) comprising a plurality of frames, each of said frames including a header (H) and one or more segments (S), each segment including parameters (CT, CS, CN) representative of said edited audio signal (x); and
one or more of said frames including a respective parameter corresponding to a transient at an instant in time within said time period and an indicator that said parameter represents an edit point.

26. Storage medium on which an audio stream (AS) as claimed in claim 25 has been stored.

## Patentansprüche

1. Verfahren zum Editieren (4) eines ursprünglichen Audiosignals (x), dargestellt durch einen codierten Audiostrom (AS), wobei der genannte Audiostrom eine Anzahl Frames enthält, wobei jedes der genannten Frames einen Kopf (H) und ein oder mehrere Segmente (S) enthält, wobei jedes Segment Parameter (CT, CS, CN) aufweist, die für das genannte ursprüngliche Audiosignal (x) repräsentativ sind, wobei dieses Verfahren die nachfolgenden Verfahrensschritte umfasst:
- das Ermitteln eines Editpunktes entsprechend einem Zeitpunkt in dem genannten ursprünglichen Audiosignal (x);
- das Einfügen eines Zielframes (i,j), welches das genannte ursprüngliche Audiosignal (x) darstellt während einer bestimmten Zeitperiode,
- das Einverleiben des genannten Zeitpunktes, eines Parameters, der einem Übergang (EEP, SEP) zu dem betreffenden Zeitpunkt entspricht und eines Indikators, der den genannten Parameter zu dem Editpunkt darstellt; und
- das Erzeugen eines codierten Audiostroms (AS), der für ein editiertes Audiosignal repräsentativ ist und das genannte Zielframe enthält.

2. Verfahren nach Anspruch 1, wobei der genannte Indikator entweder einen Start-Editpunkt oder einen End-Editpunkt enthält.

3. Verfahren nach Anspruch 1, wobei der genannte Einfügungsschritt das Einfügen des genannten Parameters in ein Segment des genannten Zielframes und das Einfügen des genannten Indikators in einen Kopf des genannten Zielframes umfasst.

4. Verfahren nach Anspruch 1, wobei der genannte Parameter, der den genannten Übergang darstellt, eine schrittartige Änderung in der Amplitude in dem genannten editierten Audiosignal angibt.

5. Verfahren nach Anspruch 1, wobei die genannten Parameter, die repräsentativ sind für das genannte ursprüngliche Audiosignal (x), Filterparameter (CN) für ein Filter enthalten, das einen Frequenzgang aufweist, der einem Zielspektrum des Rauschanteils annähert, der für einen Rauschanteil des Audiosignals repräsentativ ist.

6. Verfahren nach Anspruch 1, wobei die genannten Parameter, die für das genannte ursprüngliche Audiosignal (x) repräsentativ sind, Parameter (CN) enthalten, die unabhängig sind von einer ersten Abtastfrequenz, die benutzt wird zum Erzeugen des genannten codierten Audiostroms, wobei die genannten Parameter von Filterparametern (pi, qi) für ein Filter hergeleitet sind, das einen Frequenzgang hat, der einem Zielspektrum des Rauschanteils annähert, der für einen Rauschanteil des Audiosignals repräsentativ ist.

7. Verfahren nach Anspruch 6, wobei die genannten Filterparameterautoregressiv (pi) und verlagernde Mittlere (qi) Parameter sind und wobei die genannten unabhängigen Parameter für die Zeilenspektralfrequenzen indikativ sind.

8. Verfahren nach Anspruch 7, wobei die genannten unabhängigen Parameter in einer von absoluten Frequenzen oder in einer Bark-Skala oder einer ERB-Skale dargestellt wird.

9. Verfahren nach Anspruch 1, wobei die genannten Parameter, die für das genannte ursprüngliche Audiosignal (x) repräsentativ sind, Parameter (CT) aufweisen, die betreffende Positionen der Übergangssignalanteilen in dem Audiosignal darstellen; wobei die genannten Parameter eine Formfunktion definieren, die Formparameter und einen Positionsparameter hat.

10. Verfahren nach Anspruch 9, wobei der genannte Positionsparameter für eine absolute Zeitstelle des genannten Übergangssignalanteils in dem genannten ursprünglichen Audiosignal (x) repräsentativ ist.

11. Verfahren nach Anspruch 1, wobei die genannten Parameter, die für das genannte ursprüngliche Audiosignal (x) repräsentativ sind, Parameter (CS) umfassen, die angehaltene Signalanteile des Audiosignals darstellen, wobei die genannten Parameter Spuren enthalten, die für gekoppelte Signalanteile in nachfolgenden Signalsegmenien repräsentativ sind, und für sich erweiternde Spuren auf Basis von Parametern vorhergehender gekoppelter Signalanteile.

12. Verfahren nach Anspruch 11, wobei die Parameter für einen ersten Signalanteil in einer Spur einen Parameter umfassen, der für eine absolute Frequenz des genannten Signalanteils repräsentativ ist.

13. Verfahren nach Anspruch 1, wobei der genannte editierte Bitstrom eine empfohlene minimale Bandbreite hat, die von einem Decoder verwendet werden soll.

14. Verfahren zum Decodieren (3) eines Audiostroms, wobei das Verfahren die nachfolgenden Verfahrensschritte umfasst:
- das Auslesen eines codierten Audiostroms (AS'), der für ein editiertes Audiosignal (x) repräsentativ ist, wobei der genannte Strom eine Anzahl Frames aufweist, wobei jedes der genannten Frames einen Kopf (H) und einen oder mehrere Segmente (S) aufweist, wobei jedes Segment Parameter (CT, CS, CN) aufweist, die für das genannte ursprüngliche Audiosignal (x) repräsentativ sind, und
reagieren auf ein Frame, welches das genannte editierte Audiosignal (x) darstellt, während einer bestimmten Zeitperiode mit einem Parameter entsprechend einem Übergang zu einem Zeitpunkt innerhalb der genannten Zeitperiode und einen Indikator, dass der genannte Parameter einen Editpunkt darstellt, wobei ein Null-Ausgang für einen Teil der Zeitperiode erzeugt wird und die genannte parametrische Darstellung benutzt wird (31, 32, 33) zum Synthetisieren des genannten Audiosignals für den restlichen Teil der Zeitperiode, wobei die genannten Teile zu dem genannten Zeitpunkt aufgeteilt werden.

15. Verfahren nach Anspruch 14, wobei der genannte Erzeugungsschritt auf den genannten Indikator reagiert, der angibt, dass der genannte Editpunkt ein End-Editpunkt ist zum Erzeugen eines Null-Ausgangs für den Teil der Zeitperiode, der dem Zeitpunkt folgt und zum Benutzen (31, 32, 33) der genannten parametrischen Darstellung zum Synthetisieren des genannten Audiosignals für den Teil der Zeitperiode vor dem genannten Zeitpunkt.

16. Verfahren nach Anspruch 15, wobei der genannte Erzeugungsschritt auf den genannten End-Editpunkt reagiert zum Ausblenden des genannten Signals um den genannten Zeitpunkt herum.

17. Verfahren nach Anspruch 14, wobei der genannte Erzeugungsschritt auf den genannten Indikator reagiert, der angibt, dass der genannte Editpunkt ein Start-Editpunkt ist zum Erzeugen eines Null-Ausgangs für den Teil der Zeitperiode vor dem genannten Zeitpunkt und zum Benutzen (31, 32, 33) der genannten parametrischen Darstellung zum Synthetisieren des genannten Audiosignals für den Teil der Zeitperiode nach dem genannten Zeitpunkt.

18. Verfahren nach Anspruch 17, wobei der genannte Erzeugungsschritt auf den genannten Start-Editpunkt reagiert um das genannte Signal um den genannten Zeitpunkt herum einzublenden.

19. Verfahren nach Anspruch 14, wobei der genannte Erzeugungsschritt das Erzeugen des genannten Nullausgangs als ein Stummsignal umfasst.

20. Verfahren nach Anspruch 14, wobei der genannte Erzeugungsschritt das genannte Verketten des Audiosignalendes an einem ersten Editpunkt eines Paares von E-didpunkten mit dem Audiosignalanfang an einem zweiten Editpunkt des genannten Paares von Editpunkten umfasst.

21. Verfahren nach Anspruch 20, wobei der genannte Verkettungsschritt das Erzeugen einer Überblendung des Audiosignalendes zu dem genannten Editzeitpunkt mit dem Audiosignalanfang zu dem zweiten Editzeitpunkt.

22. Audioeditor (4) zum Editieren (4) eines ursprünglichen Audiosignal (x) dargestellt durch einen codierten Audiostrom (AS), wobei der genannte codierte Audiostrom eine Anzahl Frames aufweist, wobei jedes der genannten Frames einen Kopf (H) und ein oder mehrere Segmente (S) umfasst, wobei jedes Segment Parameter (CT, CS, CN) umfasst, die für das genannte ursprüngliche Audiosignal (x) repräsentativ sind, wobei der genannte Editor Folgendes umfasst:
- Mittel zum Ermitteln eines Editpunktes entsprechend einem Zeitpunkt in dem genannten ursprünglichen Audiosignal (x);
- Mittel zum Einfügen eines Zielframes (i,j), welches das genannte ursprüngliche Audiosignal (x) darstellt während einer bestimmten Zeitperiode,
- Mittel zum Einverleiben des genannten Zeitpunktes, einen Parameter, der einem Übergang zu dem betreffenden Zeitpunkt entspricht und einen Indikator, der den genannten Parameter zu dem Editpunkt darstellt; und
- Mittel zum Erzeugen eines codierten Audiostroms (AS), der für ein editiertes Audiosignal repräsentativ ist und das genannte Zielframe enthält.

23. Audiospieler (3), der die nachfolgenden Mittel aufweist:
- Mittel zum Auslesen eines codierten Audiostroms (AS'), der für ein editiertes Audiosignal (x) repräsentativ ist, wobei der genannte Strom eine Anzahl Frames aufweist, wobei jedes der genannten Frames einen Kopf (H) und einen oder mehrere Segmente (S) aufweist, wobei jedes Segment Parameter (CT, CS, CN) aufweist, die für das genannte ursprüngliche Audiosignal (x) repräsentativ sind, und
- Mittel zum Reagieren auf ein Frame, welches das genannte editierte Audiosignal (x) darstellt, während einer bestimmten Zeitperiode mit einem Parameter entsprechend einem Übergang zu einem Zeitpunkt innerhalb der genannten Zeitperiode und einen Indikator, dass der genannte Parameter einen Editpunkt darstellt, wobei ein Null-Ausgang für einen Teil der Zeitperiode erzeugt wird und die genannte parametrische Darstellung benutzt wird (31, 32, 33) zum Synthetisieren des genannten Audiosignals für den restlichen Teil der Zeitperiode, wobei die genannten Teile zu dem genannten Zeitpunkt aufgeteilt werden.

24. Audiosystem mit einem Audioeditor (4) nach Anspruch 22 und einem Audiospieler (3) nach Anspruch 23.

25. Audiostrom (AS), der für ein editiertes Audiosignal (x) repräsentativ ist, der eine Anzahl Frames aufweist, wobei jedes der genannten Frames einen Kopf (H) und ein oder mehrere Segmente (S) aufweist, wobei jedes Segment Parameter (CT, CS, CN) aufweist, die für das genannte editierte Audiosignal (x) repräsentativ sind; und wobei ein oder mehrere der genannten Frames einen betreffenden Parameter entsprechend einem Übergang zu einem Zeitpunkt innerhalb der genannten Zeitperiode und einen Indikator enthält, dass der genannte Parameter einen Editpunkt darstellt.

26. Speichermedium, auf dem ein Audiostrom (AS) nach Anspruch 25 gespeichert worden ist.

## Revendications

1. Procédé pour éditer (4) un signal audio original (x) représenté par un train audio codé (AS), ledit train audio codé comportant une pluralité de trames, chacune desdites trames comprenant un en-tête (H) et un ou plusieurs segments (S), chaque segment comprenant des paramètres (CT, CS, CN) représentatifs dudit signal audio original (x), le procédé comportant les étapes suivantes:
déterminer un point d'édition correspondant à un instant dans ledit signal audio original (x); insérer dans une trame cible (i,j) représentant ledit signal audio original (x), pendant une période de temps comprenant ledit instant, un paramètre correspondant à une transitoire (EEP, SEP) audit instant et un indicateur que ledit paramètre représente un point d'édition; et
générer un train audio codé (AS) représentatif d'un signal audio édité et comprenant ladite trame cible.

2. Procédé suivant la revendication 1, dans lequel ledit indicateur comprend soit un point de début d'édition, soit un point de fin d'édition.

3. Procédé suivant la revendication 1, dans lequel ladite étape d'insertion comprend l'insertion dudit paramètre dans un segment de ladite trame cible et l'insertion dudit indicateur dans un en-tête de ladite trame cible.

4. Procédé suivant la revendication 1, dans lequel ledit paramètre représentant ladite transitoire indique une modification d'amplitude en échelon dans ledit signal audio édité.

5. Procédé suivant la revendication 1, dans lequel lesdits paramètres représentatifs dudit signal audio original (x) comprennent des paramètres de filtrage (CN) pour un filtre qui a une réponse en fréquence proche d'un spectre cible de la composante de bruit représentative d'une composante de bruit du signal audio.

6. Procédé suivant la revendication 1, dans lequel lesdits paramètres représentatifs dudit signal audio original (x) comprennent des paramètres (CN) indépendants d'une première fréquence d'échantillonnage utilisée pour générer ledit train audio codé, lesdits paramètres étant dérivés de paramètres de filtrage (pi,qi) pour un filtre qui a une réponse en fréquence proche d'un spectre cible de la composante de bruit représentative d'une composante de bruit du signal audio.

7. Procédé suivant la revendication 6, dans lequel lesdits paramètres de filtrage sont des paramètres autorégressifs (pi) et à moyenne mobile (qi) et lesdits paramètres indépendants sont indicatifs de fréquences de raies spectrales.

8. Procédé suivant la revendication 7, dans lequel lesdits paramètres indépendants sont représentés dans une fréquence absolue ou dans une échelle Bark ou une échelle ERB.

9. Procédé suivant la revendication 1, dans lequel lesdits paramètres représentatifs dudit signal audio original (x) comprennent des paramètres (CT) représentant des positions respectives de composantes de signaux transitoires dans le signal audio, lesdits paramètres définissant une fonction de forme ayant des paramètres de forme et un paramètre de position.

10. Procédé suivant la revendication 9, dans lequel ledit paramètre de position est représentatif d'un emplacement temporel absolu de ladite composante de signal transitoire dans ledit signal audio original (x).

11. Procédé suivant la revendication 1, dans lequel lesdits paramètres représentatifs dudit signal audio original (x) comprennent des paramètres (CS) représentant des composantes de signal entretenues du signal audio, lesdits paramètres comprenant des voies représentatives de composantes de signal liées présentes dans des segments de signaux subséquents et étendant des voies sur la base de paramètres de composantes de signaux liées précédentes.

12. Procédé suivant la revendication 11, dans lequel les paramètres pour une première composante de signal dans une voie comprennent un paramètre représentatif d'une fréquence absolue de ladite composante de signal.

13. Procédé suivant la revendication 1, dans lequel ledit train de bits édité comprend une largeur de bande minimum recommandée à utiliser par un décodeur.

14. Procédé de décodage (3) d'un train audio, le procédé comprenant les étapes suivantes:
lire un train audio codé (AS') représentatif d'un signal audio édité (x), ledit train comprenant une pluralité de trames, chacune desdites trames comprenant un en-tête (H) et un ou plusieurs segments (S), chaque segment comprenant des paramètres (CT, CS, CN) représentatifs dudit signal audio édité (x); et
en réponse à une trame représentant ledit signal audio édité (x) pendant une période de temps donnée comprenant un paramètre correspondant à une transitoire à un instant au sein de ladite période de temps et un indicateur que ledit paramètre représente un point d'édition, produire une sortie nulle pour une partie de la période de temps et utiliser (31, 32, 33) ladite représentation paramétrique pour synthétiser ledit signal audio pendant la partie restante de la période de temps, lesdites parties étant divisées au niveau dudit instant.

15. Procédé suivant la revendication 14, dans lequel ladite étape de production est sensible audit indicateur indiquant que ledit point d'édition est un point de fin d'édition afin de produire une sortie nulle pendant la partie de la période de temps qui suit ledit instant et d'utiliser (31, 32, 33) ladite représentation paramétrique pour synthétiser ledit signal audio pendant la partie de la période de temps qui précède ledit instant.

16. Procédé suivant la revendication 15, dans lequel ladite étape de production est sensible audit point de fin d'édition pour faire disparaître graduellement ledit signal aux environs dudit instant.

17. Procédé suivant la revendication 14, dans lequel ladite étape de production est sensible audit indicateur indiquant que ledit point d'édition est un point de début d'édition afin de produire une sortie nulle pendant la partie de la période de temps qui précède ledit instant et d'utiliser (31, 32, 33) ladite représentation paramétrique pour synthétiser ledit signal audio pendant la partie de la période de temps après ledit instant.

18. Procédé suivant la revendication 17, dans lequel ladite étape de production est sensible audit point de début d'édition pour faire apparaître graduellement ledit signal aux environs dudit instant.

19. Procédé suivant la revendication 14, dans lequel ladite étape de production comprend la production de ladite sortie nulle sous la forme d'un signal silencieux.

20. Procédé suivant la revendication 14, dans lequel ladite étape de production comprend la concaténation du signal audio se terminant à un premier point d'édition d'une paire de points d'édition avec le signal audio débutant à un second point d'édition de ladite paire de points d'édition.

21. Procédé suivant la revendication 20, dans lequel ladite étape de concaténation comprend la production d'une décroissance de transition du signal audio se terminant audit premier point d'édition avec le signal audio débutant au second point d'édition.

22. Editeur audio (4) pour éditer (4) un signal audio original (x) représenté par un train audio codé (AS), ledit train audio codé comprenant une pluralité de trames, chacune desdites trames comprenant un en-tête (H) et un ou plusieurs segments (S), chaque segment comprenant des paramètres (CT, CS, CN) représentatifs dudit signal audio original (x), ledit éditeur comprenant:
des moyens pour déterminer un point d'édition correspondant à un instant dans ledit signal audio original (x);
des moyens pour insérer dans une trame cible représentant ledit signal audio original (x) pendant une période de temps comprenant ledit instant, un paramètre correspondant à une transitoire audit instant et un indicateur que ledit paramètre représente un point d'édition; et
des moyens pour générer un train audio codé (AS) représentatif d'un signal audio édité et comprenant ladite trame cible.

23. Lecteur audio (3), comprenant:
des moyens pour lire un train audio codé (AS') représentatif d'un signal audio édité (x), ledit train comprenant une pluralité de trames, chacune desdites trames comprenant un en-tête (H) et un ou plusieurs segments (S), chaque segment comprenant des paramètres (CT, CS, CN) représentatifs dudit signal audio édité (x); et
des moyens, sensibles à une trame représentant ledit signal audio édité (x) pendant une période de temps donnée comprenant un paramètre correspondant à une transitoire à un instant au sein de ladite période de temps et un indicateur que ledit paramètre représente un point d'édition, pour produire une sortie nulle pendant une partie de la période de temps et utiliser (31, 32, 33) ladite représentation paramétrique pour synthétiser ledit signal audio pendant la partie restante de la période de temps, lesdites parties étant divisées audit instant.

24. Système audio comprenant un éditeur audio (4) suivant la revendication 22 et un lecteur audio (3) suivant la revendication 23.

25. Train audio (AS) représentatif d'un signal audio édité (x) comprenant une pluralité de trames, chacune desdites trames comprenant un en-tête (H) et un ou plusieurs segments (S), chaque segment comprenant des paramètres (CT, CS, CN) représentatifs dudit signal audio édité (x); et
une ou plusieurs desdites trames comprenant un paramètre respectif correspondant à une transitoire à un instant au sein de ladite période de temps et un indicateur que ledit paramètre représente un point d'édition.

26. Support de stockage sur lequel un train audio (AS) suivant la revendication 25 a été stocké.
